(19) Europäisches Patentamt
European Patent Office
Office européen des brevets

(11) **EP 4 571 358 A2**

(12) **EUROPEAN PATENT APPLICATION**

(43) Date of publication:
**18.06.2025 Bulletin 2025/25**

(21) Application number: **24219988.3**

(22) Date of filing: **13.12.2024**

(51) International Patent Classification (IPC):
***G01S 13/02*** (2006.01)        ***G01S 13/58*** (2006.01)
***G01S 13/72*** (2006.01)

(52) Cooperative Patent Classification (CPC):
**G01S 13/0218; G01S 13/58; G01S 13/726**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.12.2023   KR 20230181747
10.12.2024   KR 20240182826**

(71) Applicant: **Korea Astronomy and Space Science
Institute
Daejeon 34055 (KR)**

(72) Inventor: **YU, Jiwoong
Sejong-si 30150 (KR)**

(74) Representative: **Mathys & Squire
Theatinerstraße 7
80333 München (DE)**

(54) **SPACE SURVEILLANCE AND TRACKING RADAR AND ANALYZING METHOD OF THE SAME RADAR**

(57)    An object of the present disclosure is to provide a space surveillance and tracking radar that can analyze a risk of collision between space objects and a risk of falling of space objects and list the space objects, that is, can be specialized in surveillance and tracking of the space objects, and an analysis method of a space surveillance and tracking radar. More specifically, the present disclosure provides a pulse integration method suitable for detection of a space object, a tracking method reflecting orbital dynamic characteristics in a tracking method, and a resource management technology suitable for space surveillance, in relation to a detection/tracking function. The present disclosure provides a method that considers both a relative range and dispersion (or standard deviation) instead of the method of a relative range among identification methods using orbital correlation, in relation to an identification function. The present disclosure provides a method of determining an orbit by utilizing a law of area velocity schedule using a time between ranges for determining an initial orbit, in relation to an initial orbit determination function. The present disclosure provides a space surveillance and tracking radar that performs Doppler estimation using a Doppler filter bank method, in relation to a Doppler estimation function. The present disclosure provides an effective visualization method suitable for space surveillance, in relation to a visualization function.

FIG. 1

EP 4 571 358 A2

## Description

### TECHNICAL FIELD

The following disclosure relates to a space surveillance and tracking radar that performs space object surveillance and tracking for listing space objects, and an analysis method of a space surveillance and tracking radar.

### BACKGROUND

A space surveillance and tracking radar refers to a radar that surveils and tracks space objects for the purpose of listing space objects. A space surveillance and tracking radar provides data for analyzing a risk of collision between space objects or a risk of falling of space objects.

The functions performed by the space surveillance and tracking radar may be broadly classified into detection/-tracking, identification, initial orbit determination, Doppler estimation, and visualization. A brief description of each function is as follows.

■ Detection/tracking

As a detection method, a statistical method using a detection law, a method using an adaptive detector CFAR, etc., are used. In addition, as a method of increasing a detection rate, an antenna size increase (or an increase in the number of elements), a use of a high-power amplifier, a pulse integration method, etc., are used. There are two types of pulse integration methods: non-coherent pulse integration and coherent pulse integration. The non-coherent pulse integration is a method of superimposing only a signal size, while the coherent pulse integration is a method of compensating and superimposing a phase.

There are various trackers such as GNN, JPDA, MHT, and PHD as the tracking method, and all of these trackers have two functions: data association and prediction.

Since the detection and tracking require a load for each operation, radars that use detection and tracking simultaneously require resource management technology.

■ Identification

Identification is performed using orbital correlation through a list of existing known orbits.

■ Initial orbit determination

A method of determining the initial orbit using radar include a method of determining an initial orbit using only a range, a method of determining an initial orbit using range and angle information, a method of determining an initial orbit using a range, Doppler, and an angle, and a method of determining an initial orbit using a range and Doppler.

■ Doppler estimation

Doppler estimation is performed through a change in time of an interval between pulses.

■ Visualization

A current state and operating state of space surveillance and tracking radar are visualized.

In the actual implementation of the space surveillance and tracking radar, military long-range radars have been used for space surveillance in the past. However, recently, with the introduction of more advanced technology and the form more suitable for the space environment, radars dedicated to space surveillance and tracking are being developed in some countries in the United States and Germany. In this process, the following problems were pointed out for each function of space surveillance and tracking radar.

■ Detection/tracking

In relation to detection, a detection rate improvement method using pulse integration used in the past has limitations for objects moving at high speed. First, there is the problem that Coherent Pulse Integration(CPI) in near real time is difficult, and the influence of movement (maneuvering) should be compensated for, but the integration is difficult when the movement is not well known. In addition, both the non-coherent and coherent pulse integration may not be used for fast moving space objects.

In relation to the tracking, many studies have been conducted on long-range radars used in the past to track aircraft flying within the Earth. However, unlike these aircraft, space objects move in orbit and do not experience rapid orbital changes. Therefore, when performing data association, there is a high possibility of errors if conventional radars are used as they are due to the problem that the orbital motion of the space objects was not considered.

In addition, the radars for the space objects have long pulse intervals, making resource management difficult.

■ Identification

When the orbital correlation is performed only with the location of the space object, the possibility of successful identification decreases as the range error increases due to the recent frequent orbit adjustments.

■ Initial orbit determination

The initial orbit determination method used in the long-range radars developed for the environment on Earth is inappropriate for the space surveillance and tracking, and there is no known initial orbit determination method suitable for space surveillance and tracking at present.

Doppler estimation

In the case of the space surveillance and tracking, the pulse interval is too long, so the Doppler precision is low, so most Doppler information is not used.

Visualization

Also, the visualization method is not known.

**SUMMARY**

An embodiment of the present disclosure is directed to providing a space surveillance and tracking radar that can analyze a risk of collision between space objects and a risk of falling of space objects and list the space objects, that is, can be specialized in surveillance and tracking of the space objects, and an analysis method of a space surveillance and tracking radar. More specifically, an object of each function of the space surveillance and tracking radar provided by the present disclosure is as follows.

Another embodiment of the present disclosure is directed to providing a pulse integration method suitable for detection of a space object, a tracking method reflecting orbital dynamic characteristics in a tracking method, and a resource management technology suitable for space surveillance, in relation to a detection/tracking function.

Another embodiment of the present disclosure is directed to providing a method that considers both a relative range and dispersion (or standard deviation) instead of the method of a relative range among identification methods using orbital correlation, in relation to an identification function.

Another embodiment of the present disclosure is directed to providing a method of determining an orbit by recursively using range information and range and angle information for initial orbit determination, in relation to the initial orbit determination.

The present disclosure provides a space surveillance and tracking radar that performs Doppler estimation using a split match filtering method using a single pulse, in relation to a Doppler estimation function.

Another embodiment of the present disclosure is directed to providing an effective visualization method suitable for space surveillance, in relation to a visualization function.

In one general aspect, a space surveillance and tracking radar includes: a radar antenna (100) that transmits and receives a radar signal for detecting a space object; an RF transmit/receive module (200) that is connected to the radar antenna (100) to convert the radar signal into an RF signal and transmit and receive the RF signal; a D/A conversion chip (300) that is connected to the RF transmit/receive module (200) to convert a digital signal and an analog signal to each other; a network interface card (NIC) (400) that is connected to the D/A conversion chip (300) to transmit information; a data processing server 500 that includes a CPU and memory (510) and a GPU (520) including a GPU processing unit (521) and a GPU memory (522) and performs analysis of detection, tracking, and identification of a space object; a visualization server (600) that is connected to the data processing server (500) to receive results of analyzing the detection, tracking, and identification of the space object and processing the results into visualization information; and a monitoring device (700) that is connected to the visualization server (600) and to output the visualization information, in which the NIC 400 is configured to directly access the GPU memory (522) to record the information, and the GPU processing unit (521) is configured to perform signal processing on the information stored in the GPU memory (522) and transmits the processed information to the CPU and memory (510).

In another general aspect, an analysis method of a space surveillance and tracking radar, which includes analysis of detection, tracking, and identification of a space object by the space surveillance and tracking radar as described above includes: a signal receiving step (S1100) in which the radar signal transmitted from the space surveillance and tracking radar and reflected by the space object is received by the space surveillance and tracking radar; a data generating step (S1200) in which radar data D(t,r) expressed as a function value of time t and range r is generated based on the received radar signal; a detection step (S1300) in which the radar data is accumulated and analyzed to detect the space object; a tracking step (S1400) in which the radar data for the space object detected in the detection step (S1300) is data associated; an orbit determination step (S1500) in which an orbit of the space object tracked in the tracking step (S1400) is calculated; an identification step (S1600) in which the space object whose orbit is determined in the orbit determination step (S1500) is identified; and a listing step (S1700) in which the space object identified in the identification step (S1600) is listed.

The detection step (S1300) may include: a step (S1310) in which received M (M=natural number) radar data are accumulated and stored $(D(t_1, r_1), ..., D(t_m, r_m))$; a step (S1320) in which N (N=natural number) radar data having a size greater than or equal to a predetermined boundary value $\gamma$ are selected, and vectors composed of time t and range r, respectively, are generated; a step (S1330) in which a step (S1331) in which three samples $[t_a, t_b, t_c]$, $[r_a, r_b, r_c]$ are randomly selected among the N time and range vectors, a step in which a set of coefficients a0, a1, and a2 of a governing equation in a form of a second-order polynomial are calculated as follows (S1332), and a step (S1333) in which the number of radar data k whose range from the governing equation function is within a predetermined range value inlier is counted are recursively performed plural times;

$$\begin{pmatrix} a_0(i) \\ a_1(i) \\ a_2(i) \end{pmatrix} = \begin{pmatrix} 1 & t_a & t_a^2 \\ 1 & t_b & t_b^2 \\ 1 & t_c & t_c^2 \end{pmatrix}^{-1} \begin{pmatrix} r_a \\ r_b \\ r_c \end{pmatrix}$$

a step (S1340) in which a single governing equation is determined by the set of coefficients $a_0$, $a_1$, and $a_2$ in a maximum value of a plurality of counted number k values obtained by the recursive execution or at least one governing equation is determined by the set of coefficients $a_0$, $a_1$, and $a_2$ when the counted number k is greater than or equal to a predetermined reference value Thres;

a step (S1351) in which non-coherent pulse integration is performed in which a size d of N radar data is all added for a specific time t according to the following equation, based on the radar data D(t,r) expressed by the determined governing equation $a_0+a_1t[i]+a_2t^2[i]=r$;

$$d'[n] = \sum_{i=1}^{N} (d[t,i])$$

a step (S1360) of determining whether an absolute value of the result value obtained by the integration is greater than a predetermined detection threshold value based on whether the following equation is satisfied; and

$|d'[n]| > Thres$

a step in which when the absolute value of the result value obtained by the integration is greater than the predetermined detection threshold, it is determined as a detection success, and a range r value from the space object at the specific time t is determined from the result value determined as the detection success.

The detection step (S1300) may include: a step (S1310) in which received M (M=natural number) radar data are accumulated and stored $(D(t_1, r_1) ..., D(t_m, r_m))$; a step (S1320) in which N (N=natural number) radar data having a size greater than or equal to a predetermined boundary value $\gamma$ are selected, and vectors composed of time t and range r, respectively, are generated; a step (S1330) in which a step (S1331) in which three samples $[t_a, t_b, t_c]$, $[r_a, r_b, r_c]$ are randomly selected among the N time and range vectors, a step in which a set of 0coefficients a0, a1, and a2 of a governing equation in a form of a second-order polynomial are calculated as follows (S1332), and a step (S1333) in which the number of radar data k whose range from the governing equation function is within a predetermined range value inlier is counted are recursively performed plural times;

$$\begin{pmatrix} a_0(i) \\ a_1(i) \\ a_2(i) \end{pmatrix} = \begin{pmatrix} 1 & t_a & t_a^2 \\ 1 & t_b & t_b^2 \\ 1 & t_c & t_c^2 \end{pmatrix}^{-1} \begin{pmatrix} r_a \\ r_b \\ r_c \end{pmatrix}$$

a step (S1340) in which at least one single governing equation is determined by the set of coefficients $a_0$, $a_1$, and $a_2$ when any of a plurality of counted number k values obtained by the recursive execution is a maximum value or at least one governing equation is determined by the set of coefficients $a_0$, $a_1$, and $a_2$ when the counted number k is greater than or equal to a predetermined reference value Thres;

a step (S1352) in which coherent pulse integration is performed in which sizes d of N radar data are phase-compensated for each pulse and then all added for a specific time t according to the following equation, based on the radar data D(t,r) expressed by the determined governing equation $a_0+a_1t[i]+a_2t^2[i]=r$;

$$d'[n] = \sum_{i=1}^{N} (d[t,i] * e^{-i\phi[n \cdot i]})$$

(Here, $\phi[n,i] = \dfrac{a_1t[i] + a_2t[i]^2}{\lambda} \Delta R$ : compensation phase,

$\Delta R$: resolution of one cell, $\lambda$: wavelength of radar center frequency)

a step (S1360) of determining whether an absolute value of the result value obtained by the integration is greater than a predetermined detection threshold value based on whether the following equation is satisfied; and

|d' [n]| > Thres

a step in which when the absolute value of the result value obtained by the integration is greater than the predetermined detection threshold, it is determined as a detection success, and a range r value from the space object at the specific time t is determined from the result value determined as the detection success.

The analysis method may further include: prior to the data association operation of the tracking step (S1400), a Doppler estimation step in which one radar signal is divided into several and Doppler estimation is performed on one signal, in which the Doppler estimation step may include: a step in which the received radar signal s(t) and split match filters $mf_1$(t), ..., $mf_n$(t) divided into (N is a natural number) are calculated according to the following equation to obtain N compressed signals; and

$$s_{ci}(t) = IFFT(FFT(mf_i(t).*FFT(s(t)))$$

a step in which the Doppler estimation is performed on a range detected for N signals using a short time Fourier transform (STFT) method or a periodogram method according to the following equations.

$$f = STFT([s_{c1}(r), \cdots, s_{cn}(r)])$$

$$f = STFT([s_{c1}(r), \cdots, s_{cn}(r)])$$

In the tracking step (S1400), to allow movement of the orbit in an inertial coordinate system to satisfy a condition that it exists on a single plane, the data association may be performed on a space object that exist close to a predetermined reference on the plane, but space objects whose travel directions match and space objects whose ranges do not change abruptly within a predetermined reference may be classified, and when an unidentified space object is observed more than twice as a result of the classification, the orbit determination step (S1500) may be performed, and the space object may be incorporated as a new space object and thus the tracking step (S1400) may be performed.

The orbit determination step (S1500) may determine the orbit by recursively using range information and range and angle information for determining an initial orbit.

The analysis method may further include: to perform resource management, a step of determining an operating range of a detection or tracking beam; a step of determining the number of beam operations that operates within the operating range; a step of determining a scan time obtained by dividing the number of operations by a pulse repetition interval (PRI), in which, when determining the scan time, a beam transit time may be determined as a value greater than a comparison time obtained by measuring an angular velocity of a randomly selected space object passing through a ceiling and dividing the measured angular velocity by a beam width, and a maximum tracking time may be determined so that a sum of the scan time and a tracking time is less than the beam transit time, when determining the number of beam operations, the maximum number of simultaneous tracking beam operations may be determined by using a ratio of beams that operates as much as the tracking time based on the number of predetermined tracking beams, and when there is no tracking beam operation, it may be determined to continuously operate a search beam.

The identification step (S1600) may include: to perform identification using an orbit correlation considering a relative range and dispersion, a step of converting the acquired data into an inertial coordinate system based on the acquired data acquired for one space object through the detection step (S1300) and the tracking step (S1400); a step of converting existing data for a space object existing in an existing list into observation data in an inertial coordinate system by transmitting the existing data for the observation time; a step of calculating the relative range and dispersion between the acquired data and the observed data; and a step of classifying the space object of the observed data by identifying a space object having a relative range and dispersion value within the predetermined reference.

In still another general aspect, a visualization method of a space surveillance and tracking radar that visualizes an analysis result of a space object by the space surveillance and tracking radar as described above includes: an object data storage step in which results of analyzing of detection, tracking, and identification of a plurality of mutually distinguishable space objects transmitted from the data processing server (500) are stored in a memory of the visualization server (600); a shape trajectory calculation step in which 2D and 3D shapes and trajectories for each space object are calculated by a processing unit of the visualization server (600); a selection system calculation step in which information on a detection state, an object type, and radar cross section (RCS) size for each space object is calculated by the processing unit of the visualization server (600); a selective visualization step in which the shape and trajectory of the space object are visualized and output to the monitoring device (700) according to at least one selection system selected from the detection state, the object type, and the RCS size by the processing unit of the visualization server (600); and an additional information display step in which a radar state and observation statistics are displayed together with space object information on the monitoring device (700) by the processing unit of the visualization server (600).

In the selective visualization step, the detection state of the space object may be classified into classification items including {detected space object, tracked space object, space object that is not listed but detected, space object that is detected but not listed, and space object that is listed but detected}, and may be visualized so that colors or shapes are output differently or display is selectable depending on the detection state, and the object type of the space object may be classified into classification items including {operating satellite, satellite whose operating is terminated, launch vehicle debris, space debris, cube satellite, earth observation satellite, communication satellite, and constellation satellite}, and may be visualized so that colors or shapes are output differently or display is selectable depending on the object type, and may be visualized so that the size of the shape visualized is displayed differently depending on the RCS size of the space object.

In yet another general aspect, a correction method of a space surveillance and tracking radar that corrects an analysis result of a space object by the space surveillance and tracking radar as described above includes: to perform a geometric verification correction by allowing a correction tower provided outside the space surveillance and tracking radar to calculate physical positions x, y, and z of each of transmitter and receiver elements and physical errors $\delta x$, $\delta y$, and $\delta z$ which are a difference in the physical positions relative to theoretical positions to correct the physical positions and calculate a time delay $\tau$ of each of the transmitter and receiver elements to find a time synchronization error, in order to correct the receiver element, a reception correction preparation step in which a set of sine waves having at least two frequencies close to each other is generated by the correction tower and received by the receiver element to measure a phase; in order to correct the transmitter element, a transmission correction preparation step in which the set of sine waves having at least two frequencies close to each other is generated by the transmitter element and received by the correction tower to measure the phase; a relative range calculation step in which unknowns n and m are determined by calculating the following relative range r relationship plural times so that an error is minimized using ambiguity up to a least common multiple of two wavelengths and an approximate relative range value known in advance to calculate the relative range;

$$R = n\frac{c}{f_1} + \frac{c}{2\pi f_1}\phi_1 = m\frac{c}{f_2} + \frac{c}{2\pi f_2}\phi_2$$

(here, $f_1$, $f_2$: two frequencies used for a random sinusoidal wave set,

$\varphi_1$, $\varphi_2$: phase difference between the phase generated and the phase measured by the correction tower in each of $f_1$ and $f_2$,

c: speed of light,

n, m: random integer)

a geometric verification correction step in which the physical errors $\delta x$, $\delta y$, and $\delta z$ and the time delay $\tau$ of the receiver element or the transmitter element are calculated and corrected using a relative range result r obtained by performing reception correction preparation step-relative range calculation step or transmission correction preparation step-relative range calculation step at least four times in different environments and the following equation.

$$R_{c_n nm} = \sqrt{(x_{c_n} - ndx + \delta x_{nm})^2 + (y_{c_n} - mdy + \delta y_{nm})^2 + (z_{c_n} \delta z_{nm})^2} + bias$$

($R_{cnm}$: relative range between antenna elements and correction towers in n $\times$ m,

$x_c$, $y_c$, $z_c$: absolute positions of antenna elements,

n, m: arbitrary integers and arbitrary positions of antenna arrays,

dx, dy: spacing of arrays separated by x and y axes,

$\delta x_{nm}$, $\delta y_{nm}$, $\delta z_{nm}$: displacements of antenna elements along x, y, and z axes,

bias: system bias for range).

## BRIEF DESCRIPTION OF THE DRAWINGS

FIG. 1 is a configuration diagram of a space surveillance and tracking radar of the present disclosure.

FIG. 2 is an analysis method of a space surveillance and tracking radar of the present disclosure.

FIG. 3 is several examples of beam operation scenarios.

FIG. 4 is a diagram illustrating a detection step of the space surveillance and tracking radar of the present disclosure.

FIG. 5 is a diagram illustrating an example of deriving a governing equation.

FIG. 6 is a diagram illustrating an actual example of pulse integration.

FIG. 7 is a diagram illustrating an example of Doppler estimation of the present disclosure.

FIG. 8 is a detailed flowchart of a tracking process.

[Detailed Description of Main Elements]

100: Radar antenna

200: RF transmit/receive module

300: D/A conversion chip

400: NIC

500: Data processing server

510: CPU and memory

520: GPU

521: GPU processing unit

522: GPU memory

600: Visualization server

700: Monitoring device

**DETAILED DESCRIPTION OF EMBODIMENTS**

Hereinafter, a space surveillance and tracking radar according to the present disclosure having the above-described configuration and an analysis method of a space surveillance and tracking radar will be described in detail with reference to the attached drawings.

[1] Space surveillance and tracking radar

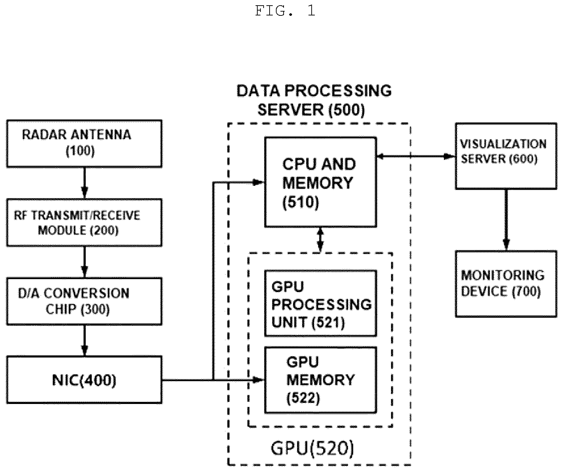

FIG. 1 is a configuration diagram of a space surveillance and tracking radar of the present disclosure. As illustrated, the space surveillance and tracking radar of the present disclosure includes, first, in terms of hardware configuration, a radar antenna 100, an RF transmit/receive module 200, a D/A conversion chip 300, a network interface card (NIC) 400, a data processing server 500, a visualization server 600, and a monitoring device 700.

As described above, the space surveillance and tracking radar of the present disclosure is a device that detects, tracks, and identifies an orbit of a space object to determine the orbit and lists and analyzes the space object in preparation for the risk of collision between the space objects and the risk of falling of the space objects.

The radar antenna 100 transmits and receives a radar signal to detect the space object. When the radar antenna 100 transmits the radar signal toward space, if a space object exists, the radar signal is reflected by the space object and returns. The radar antenna 100 receives the reflected radar signal and uses the radar signal as basic information for detecting, tracking, and identifying the space object.

The RF transmit/receive module 200 is connected to the radar antenna 100 and converts the radar signal into an RF signal and transmits and receives the RF signal. By doing so, the radar signal may be standardized for general use.

The D/A conversion chip 300 is connected to the RF transmit/receive module 200 and converts a digital signal and an analog signal to each other. Since the radar signal and the RF signal converted from the radar signal are analog signals, the radar signal and the RF signal are not easy to use for analysis as they are, so they are converted into digital signals that are more convenient for analysis. The D/A conversion chip 300 may also play a role in converting the analog signal into the digital signal if necessary. For a specific example, by including an ADC (Rx) and a DAC (Tx) in a system on chip (SoC) module, the D/A conversion chip 300 may be configured as a digital up converter and a digital down converter.

The NIC 400 is connected to the D/A conversion chip 300 to transmit information.

The data processing server 500 may include a CPU and memory 510 and, a GPU 520 including a GPU processing unit 521 and a GPU memory 522. Analysis for detection, tracking, and identification of actual space objects is performed in the data processing server 500.

The visualization server 600 is connected to the data processing server 500 to receive results of analyzing the detection, tracking, and identification of the space object and process the results into visualization information.

The monitoring device 700 is connected to the visualization server 600 to output the visualization information.

In general, the radar analyzes information in the CPU which is a component of the CPU and memory 510 of the data processing server 500. However, since the CPU should perform not only operations for information analysis but also operations, commands, etc., for overall device control, this causes excessive load on the CPU, making resource management difficult.

In the present disclosure, to solve the problem, the NIC 400 is configured to directly access the GPU memory 522 to record the information, and the GPU processing unit 521 is configured to perform signal processing on the information stored in the GPU memory 522 and transmits the processed information to the CPU and memory 510. In actually implementing this, GPU RDMA technology may be applied, which directly connects the received signal to the GPU memory through an optical port. That is, in the present disclosure, information is first stored in the GPU memory 522 of the GPU 520, and the GPU processing unit 521 performs signal processing, such as detection, tracking, and identification, and then transmits the processed information to the CPU and memory 510, thereby realizing large-capacity communication with little delay and no load on the CPU.

[2] Analysis method of a space surveillance and tracking radar

The analysis of detection, tracking, and identification, which is actually performed in the data processing server 500, is performed by software. The results of this analysis are stored in the storage unit of the CPU and memory 510 of the data processing server 500, and are also transmitted to the memory of the visualization server 600 and may be visualized and output on the monitoring device 700. Hereinafter, the analysis of detection, tracking, and identification, which is performed in the data processing server 500, will be described in more detail.

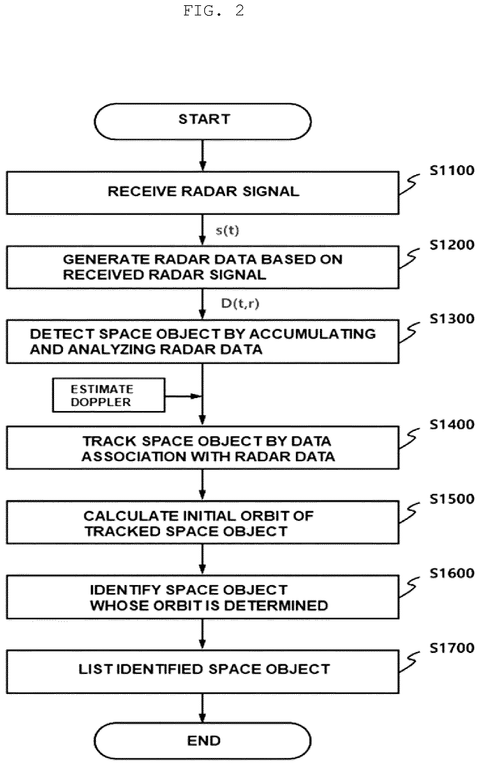

FIG. 2 is a flowchart illustrating the analysis method of a space surveillance and tracking radar of the present disclosure. The analysis method of a space surveillance and tracking radar of the present disclosure may include a signal receiving step (S1100), a data generating step (S1200), a detection step (S1300), a tracking step (S1400), an orbit determination step (S1500), an identification step (S1600), and a listing step (S1700). First, each step will be briefly described below.

In the signal receiving step (S1100), the radar signal transmitted from the space surveillance and tracking radar and reflected by the space object is received by the space surveillance and tracking radar. Describing specifically, when a radar signal beam is irradiated into space from the transmitter element of the radar antenna 100, the radar signal beam only proceeds as it is in empty space, but is reflected and returns when it encounters a space object. In other words, when the reflected signal is caught by the receiver element of the radar antenna 100, it is possible to know that there is the space object.

In the data generation step (S1200), radar data D(t,r) expressed as a function value of time t and range r is generated based on the received radar signal. The radar signal itself is an analog signal, but may be digitized and converted into radar data, which may then be analyzed more easily by calculations.

In the detection step (S1300), the space object is detected by accumulating and analyzing the radar data. Here, since the radar data is accumulated and analyzed, the present disclosure may greatly increase signal-to-noise ratio (SNR), thereby obtaining a great effect of improving the accuracy and reliability of detection.

In the tracking step (S1400), the radar data for the space object detected in the detection step (S1300) is data associated. In this case, the present disclosure improves the tracking accuracy and reliability by further introducing a new Doppler estimation method, and the tracking step (S1400) itself reflects the orbital dynamic characteristics, making it much more suitable for tracking the behavior of space objects than in the past.

In the orbit determination step (S1500), the orbit of the space object tracked in the tracking step (S1400) is calculated. In this case, in the present disclosure, the result of the initial orbit determination is utilized for tracking, which is suitable for space objects undergoing orbital motion.

In the identification step (S1600), the space object whose orbit was determined in the orbit determination step (S1500) is identified. In particular, in the present disclosure, by utilizing orbital correlation while considering both the relative range and dispersion, it is more effective in identifying the space objects undergoing the orbital motion.

In the listing step (S1700), the space objects identified in the identification step (S1600) are listed.

Hereinafter, each step of the analysis method of the present disclosure will be described in more detail and specifically.

2-1. Detection step

As a general radar detection method, there are a method of detecting a signal exceeding a threshold value defined by a user according to a detection law, a method of detecting a signal when an average of a test target cell is greater than a constant false alarm rate (CFAR), that is, an average of adaptive surrounding cells, and the like.

In addition, in order to improve the detection performance, a method of superimposing multiple pulses to increase the signal-to-noise ratio (SNR) is widely used. However, when the target object is moving, an error may occur when superimposing without considering the movement. In the case of military radars that detect aircraft in the past, since the movement of the target object is relatively slow and the pulse interval of the radar is relatively fast, there was no major problem even if the target object was moving. However, when detecting the space objects, compensation is essential because the speed of the target object is much faster and the pulse interval of the radar is relatively large.

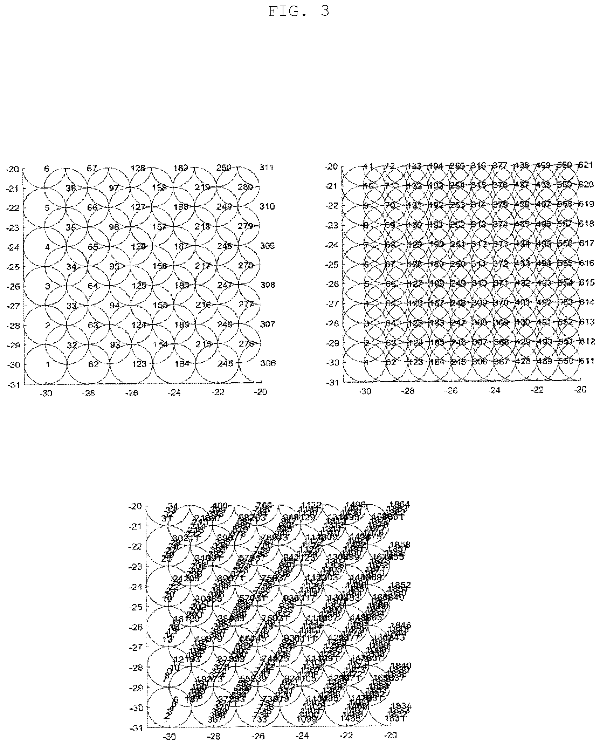

When using multiple pulses, the beams may be transmitted plural times to the same location and accumulated, and since the target may move in the meantime and escape the beam, another beam may be transmitted between the first and second beams. FIG. 3 illustrates several examples of beam operation scenarios. The upper left diagram of FIG. 3 illustrates a case where the beams are operated without superimposing, and the upper right diagram of FIG. 3 illustrates a method where they superimpose by about half. In addition, the lower diagram of FIG. 3 illustrates a method in which the beams are transmitted plural times to the same location and accumulated. This beam operation determines how many pulses to irradiate to one beam by considering the moving speed of the space object and the width of the beam (this will be explained in more detail later).

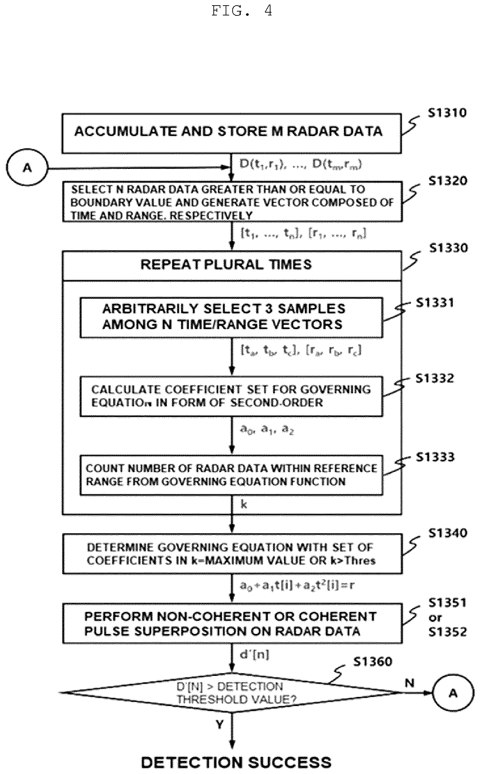

In the detection step (S1300), the radar signal (furthermore, the radar data processed and digitized for analysis convenience) that is transmitted into space and reflected back after encountering a space object is used to ultimately derive the relative range to the space object. FIG. 4 is a flowchart dividing the detection step of the space surveillance and tracking radar of the present disclosure into more detailed steps, and the detection step (S1300) will be described in more detail through this.

First, M (M = natural number) received radar data are accumulated and stored ($D(t_1,r_1)$, ..., $D(t_m,r_m)$) (S1310). Among these radar data, not only the signals actually reflected from the space object but also noise will be mixed. In order to filter the clear noise first, signals with a size smaller than a predetermined threshold value $\gamma$ are classified as noise and ignored, and analysis is performed with the remaining signal data.

Next, N radar data (N = natural number) having a size greater than or equal to a predetermined boundary value $\gamma$

are selected, and vectors composed of time t and range r, respectively, are generated (S1320). In other words, the vectors generated here are time vectors $[t_1, ..., t_n]$ and range vectors $[r_1, ..., r_n]$.

Next, a process of selecting three samples from among these data and obtaining a governing equation using the samples is repeatedly performed (S1330). This process may be described in more detail as follows.

First, three samples $[t_a, t_b, t_c]$, $[r_a, r_b, r_c]$ are randomly selected among N time and range vectors (S1331). Using the sample time vectors and range vectors selected in this way, a set of coefficients $a_0$, $a_1$, and $a_2$ of a governing equation in the form of a second-order polynomial are generated as follows (S1332). That is, when first setting up the governing equation, the set of coefficients $a_0$, $a_1$, and $a_2$ are unknown, but by entering the sample time vector and range vector values and solving the second-order polynomial, the solution to the set of coefficients $a_0$, $a_1$, and $a_2$ may be obtained.

$$\begin{pmatrix} a_0(i) \\ a_1(i) \\ a_2(i) \end{pmatrix} = \begin{pmatrix} 1 & t_a & t_a^2 \\ 1 & t_b & t_b^2 \\ 1 & t_c & t_c^2 \end{pmatrix}^{-1} \begin{pmatrix} r_a \\ r_b \\ r_c \end{pmatrix}$$

$$\begin{pmatrix} a_0 \\ a_1 \\ a_2 \end{pmatrix} = \begin{pmatrix} \dfrac{t_b t_c}{(t_b + t_c)(t_a - t_b)} & \dfrac{t_c(-t_b^2 + t_a t_c)}{(t_b^2 - t_c^2)(t_a - t_b)} & \dfrac{t_a^2}{(t_b^2 - t_c^2)} \\[4mm] \dfrac{1}{t_a - t_b} & -\dfrac{1}{t_a - t_b} & 0 \\[4mm] -\dfrac{1}{(t_b + t_c)(t_a - t_b)} & \dfrac{t_a - t_c}{(t_b^2 - t_c^2)(t_a - t_b)} & -\dfrac{1}{(t_b^2 - t_c^2)} \end{pmatrix} \begin{pmatrix} r_a \\ r_b \\ r_c \end{pmatrix}$$

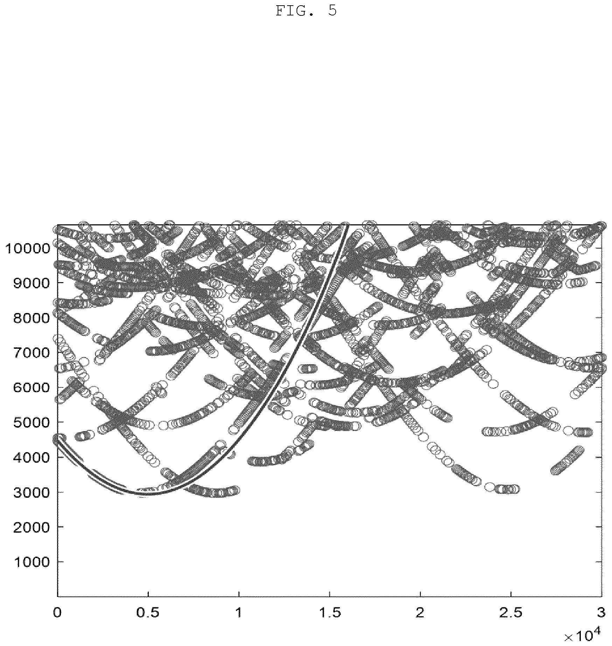

FIG. 5 is an example of a graph in which radar data are accumulated and displayed with pulse sequence (slow-time) as the horizontal axis and range (fast-time) as the vertical axis, and a function graph represented by the-described governing equation is superimposed on the graph. When the governing equation function is drawn in this way, the points representing each radar data may superimpose with the governing equation function or may be separated by a small range. In this case, when most of the points superimpose with or are close to the governing equation function, it may be seen that the governing equation is very appropriately obtained. On the other hand, if there are many points that are far from the governing equation, it may be seen that the governing equation is not appropriately obtained. The calculation for making such a determination may be expressed quantitatively as follows. The number of radar data k whose range from the governing equation function is within a predetermined range value inlier is counted (S1333).

As described above, when the step of obtaining the governing equation is performed once, one k value is obtained, that is, when the step is performed plural times, multiple k values are obtained. With the k values obtained in this way, it is necessary to determine whether the governing equation obtained in each step is appropriate.

Specifically, a single governing equation is determined by the set of coefficients $a_0$, $a_1$, and $a_2$ when any of a plurality of counted number k values obtained by the recursive execution is a maximum value or at least one governing equation is determined by the set of coefficients $a_0$, $a_1$, and $a_2$ when the counted number k is greater than or equal to a predetermined reference value Thres (S1340). When multiple governing equations are determined, one governing equation may ultimately be obtained by superimposing the governing equations.

The above-described process may be expressed as an algorithm as follows.

```
algorithm 1

[S1310] received signals D(t,r)

[S1320] select n samples ([t_1,⋯,t_n],[r_1,⋯,r_n]) from D(t,r)

[S1330]

while i=1, i<Q # for example, Q=1000

[S1331] select 3 random samples ([t_a,t_b,t_c],[r_a,r_b,r_c]) of n samples

[S1332] determine second-order polynomial coefficients
(a_0+a_1t+a_2t^2=r) connecting 3 random samples
```

$$\begin{pmatrix} a_0(i) \\ a_1(i) \\ a_2(i) \end{pmatrix} = \begin{pmatrix} 1 & t_a & t^2_a \\ 1 & t_b & t^2_b \\ 1 & t_c & t^2_c \end{pmatrix}^{-1} \begin{pmatrix} r_a \\ r_b \\ r_c \end{pmatrix}$$

```
count(i)=0
```

```
        for j=1:n
```

$$a_0+a_1t_j+a_2t^2_j = r$$

$$\hat{r}=a_0+a_1t_j+a_2t^2_j$$

$$|\hat{r}-r_j| < inlier \quad \text{if}$$

```
                count(i)=count(i)+1

            end

        end

        i=i+1

end

argmax count=function that finds a value of k where k # count

is maximized

Determine a_0(k), a_1(k), a_2(k) or determine a plurality of

coefficients where count>Thres
```

Based on the radar data D(t,r) expressed as the governing equation $a_0+a_1t[i]+a_2t^2[i]=r$ determined in this way, a process of improving SNR by performing the pulse integration is now performed. As for the pulse integration method, either non-coherent pulse integration or coherent pulse integration may be selectively used as described above.

In the case of the non-coherent pulse integration, the sizes d of N radar data are added together for a specific time (t) according to the following equation (S1351). The result obtained in this way becomes a one-dimensional real number.

$$d'[n] = \sum_{i=1}^{N} (d[t,i])$$

In the case of the coherent pulse integration, the sizes d of N radar data are phase-compensated for each pulse and then all added for a specific time t according to the following equation (S1352). The result value obtained in this way becomes a one-dimensional complex number.

$$d'[n] = \sum_{i=1}^{N} (d[t,i] * e^{-i\phi[n,i]})$$

(Here, $\phi[n,i] = \dfrac{a_1 t[i] + a_2 t[i]^2}{\lambda} \Delta R$ : compensation phase,

$\Delta R$: : resolution of one cell, $\lambda$: wavelength of radar center frequency)

Finally, it is determined whether the absolute value of the result value obtained by the superimposition is greater than the predetermined detection threshold by satisfying the following equation (S1360).

|d' [n] | > Thres

When the absolute value of the result value obtained by the integration is greater than the predetermined detection threshold (S1360-Yes), it is determined as a detection success, and a range r value from the space object at the specific time t is determined from the result value determined as the detection success. If the result value is less than the detection threshold (S1360-No), the result is deleted and the process starts again from the step of selecting N radar data (S1320).

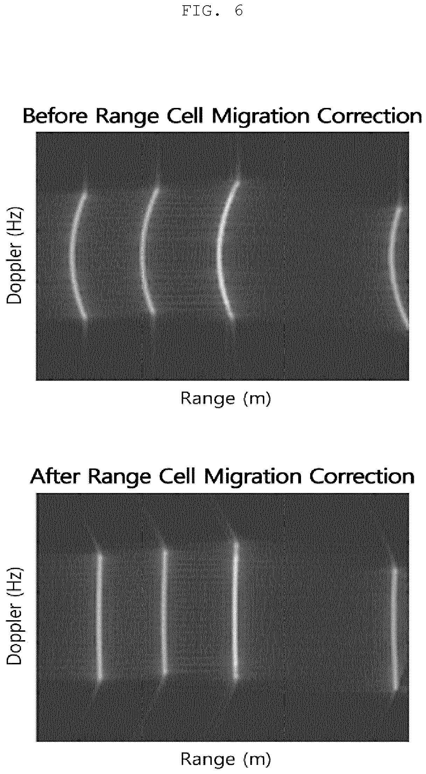

FIG. 6 is a visual representation of an actual example of pulse superimposition for easy intuitive understanding. The upper drawing of FIG. 6 is an observation value before the range cell migration correction, and multiple pulse values are displayed along the vertical axis time. As described above, since the space objects move considerably faster than the pulse interval, the pulse values are not aligned in a straight line as illustrated in the upper drawing of FIG. 6, but appear in a curved shape. The range cell compensation is used to compensate for the movement of such objects, and when the range cell compensation is performed, the observation values, which were in a curved shape as illustrated in the lower drawing of FIG. 6, are converted into a straight line. In this straight-line state, the absolute values are added, which is the non-coherent pulse integration, and as described above, the result obtained in this way becomes a one-dimensional real number. Alternatively, in this straight-line state, the different phases are compensated for and added, which is the coherent pulse integration, and as described above, the result value obtained in this way becomes a one-dimensional complex number. When the added result (i.e., k) is greater than a certain size, the detection is determined to be successful.

2-2. Doppler estimation

As described above, when the detection step (S1330) is completed, the data association operation of the tracking step (S1340) should be performed, but the Doppler estimation may be performed before that. In the past, the data associated with a single target object was collected and the Doppler estimation was performed using their phase difference. However, as described above, the pulse interval of the conventional method was too long to track the space object, and thus the Doppler precision was low, which was not practically used.

In the present disclosure, in order to solve this problem, in the Doppler estimation step, one radar signal is divided into several and the Doppler estimation is performed on one signal. This process may also be said to be for improving the SNR. The Doppler estimation step of the present disclosure is described in detail as follows.

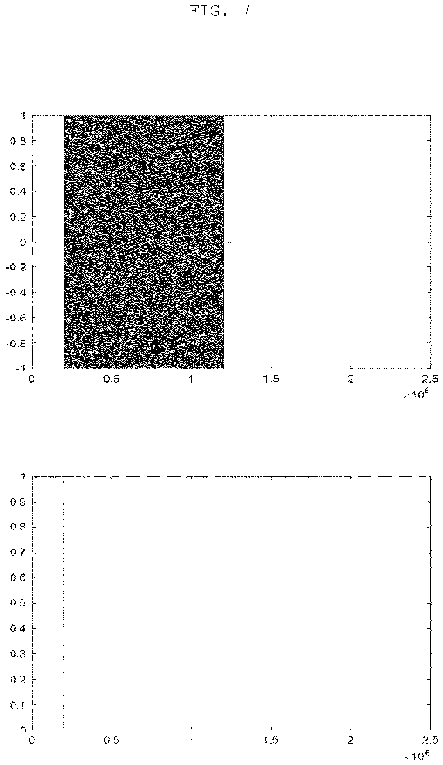

FIG. 7 is an example for describing the Doppler estimation of the present disclosure. When the match filter mf(t) is applied to the received radar signal s(t), a signal $s_c(t)$ having a shape similar to the upper drawing of FIG. 7 may be obtained. In this case, in the present disclosure, the match filter is divided into N split match filters, and each split match filter is applied to the radar signal. That is, the received radar signal s(t) and split match filters $mf_1$ (t), ..., $mf_n$(t) divided into (N is a natural number) are calculated according to the following equation to obtain N compressed signals.

$$s_{ci}(t) = IFFT\left(FFT\left(mf_i(t) .* FFT\left(s(t)\right)\right)\right)$$

The N compressed signals obtained in this way are combined to perform the Doppler estimation for the range detected for the N signals. Here, an appropriate method among two methods may be selected and used. The short time Fourier transform (STFT) method may be used as the first method, and in this case, the following equation is used.

$$f = STFT\left(\left[s_{c1}(r), \cdots, s_{cn}(r)\right]\right)$$

The periodogram method may be used as the second method, and in this case, the following equation is used.

$$f = STFT\left(\left[s_{c1}(r), \cdots, s_{cn}(r)\right]\right)$$

The above-described process may be expressed as an algorithm as follows.

algorithm #2 Doppler estimation method using single pulse

Received signal s(t)

matched filter mf(t)

e.g.) when using LFM waveform: $mf(t) = \begin{cases} e^{-jkt^2} & \text{if } 0 < t \leq \tau \\ 0 & else \end{cases}$ , $\tau$

indicates a pulse width, k denotes result $S_c$(t) of performing

chirp rate matched filter

Targeted distance, r detection

Split matched filters $mf_1(t), \cdots, mf_n(i)$

e.g., 1) LFM waveform $mf_i(t) = \begin{cases} e^{-jkt^2} & \text{if } \frac{t}{n}(i-1) < \frac{t}{n}i \leq \tau \\ 0 & else \end{cases}$

$s_{ci}(t) = IFFT(FFT(mf_i(t).*FFT(s(t)))$

Result $S_{ci}$(t) of applying ith matched filter

STFT(short time Fourier transform) depending on detected r

$f = STFT([s_{c1}(r), \cdots, s_{cn}(r)])$ or $f = periodogram([s_{c1}(r), \cdots, s_{cn}(r)])$

Detect Doppler frequency fd where f is greater than or equal

to a certain size

### 2-3 Tracking

As described above, in the tracking step (S1400), the radar data for the space object detected in the detection step (S1300) is data associated. In this case, unlike the conventional radars where the target object was an aircraft such as a fighter jet, the space object to be observed in the present disclosure has an orbital motion, so there was a problem that it was not suitable for calculation using the conventional method.

In order to solve this problem, the present disclosure introduces the assumption that the orbital movement in the inertial coordinate system exists on a single plane, and performs the tracking operations to satisfy this condition. To describe more specifically, the data association is performed on the space objects that exist close to a predetermined criterion on the plane. In addition, space objects whose travel directions match and space objects whose ranges do not change abruptly within a predetermined reference are classified, thereby performing the tracking. In this case, when an unidentified space object is observed more than twice as a result of the classification, the orbit determination step (S1500) is performed, and the space object is incorporated as a new space object and thus the tracking step (S1400) is performed.

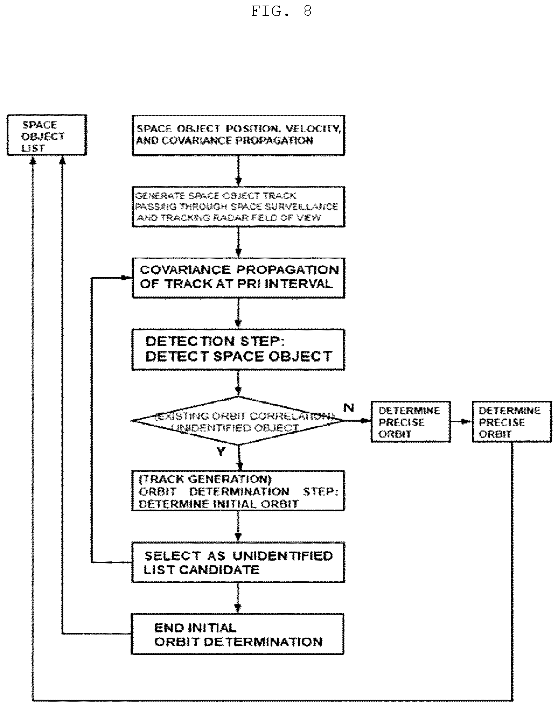

The tracking step (S1400) is described in more detail as follows. FIG. 8 is a flowchart illustrating the detailed steps of the tracking step (S1400) and other steps (detection step, orbit determination step) in relation to each other. Referring to FIG. 8, first, the position, velocity, and covariance of the space object in the space object list are propagated, and the track of the space object passing through the field of view (FOV) of the space surveillance tracking radar is generated. In this case, the detection beam and the tracking beam are distributed by the resource management, and the beam operation is performed (this will be described in more detail later). When the space object is detected in this process, the space object is detected by the detection step (S1300) described above.

In this way, the space object detected in the detection step (S1300) is identified through the correlation in the existing orbital unidentified candidate list. When the detected space object is identified as an unidentified object, the orbit determination step (1500) is performed using at least two detection results to enable initial orbit determination. When the initial orbit determination is successful by performing the observation value of the existing unidentified space object and the initial orbit determination, it is added to the space object list, a space object candidate track is created, and the space object candidate is accumulated to perform a recursive initial orbit determination.

Meanwhile, when the space object candidate track is no longer observed, the precise orbit is determined using the final initial orbit determination value as the initial value, and then it is registered in the space object list and the space object candidate track is removed. When the precise orbit determination fails, the space object candidate track is maintained and the next observation (i.e., the track when the unidentified object enters the FOV after orbital propagation) is attempted. When identified in this way, if it is an object with existing information, the above-described process is repeated several times to observe it, and then the track is terminated, and the precise orbit is determined with the terminated track.

The above-described process may be expressed as an algorithm as follows.

```
algorithm #3 (Tracking)

Input: Space object list

Output: Beam operation scenario

1.  Space  object  position,  velocity,  and  covariance

propagation in the space object list

2. Generate the space object tracks passing through the space

surveillance radar FOV from the results

3. Distribute the searching beams and tracking beams through

resource management to operate beams

4.  When  the  space  object  is  detected,  identify  the  space
```

object through correlation in the existing unidentified orbital candidate list

5-1. When the identification result is an unknown object, add the unknown object to the unidentified space object candidate list (unidentified space objects may be determined through at least two detections to determine their initial orbits)

5-2. Determine the existing unidentified space object observation value and initial orbit

5-3. When the initial orbit determination is successful, add it to the space object list, generate the space object candidate track, and perform the recursive initial orbit determination by accumulating the space object candidates

5-4. When the space object candidate track is no longer observed, list it in the space object list after the precise orbit determination using the final initial orbit determination value as the initial value, and remove the space object candidate track

5-5. When the precise orbit determination fails, maintain the space object candidate track and attempt the next observation. Track when the orbit is propagated and enters the FOV

6-1. When the identification result is a known object, observe N times according to the policy and then end the

```
track

6-2. Perform the precise orbit determination on the ended

track
```

2-4. Initial Orbit Determination

As describe above, in the orbit determination step (S1500), the orbit of the space object tracked in the tracking step (S1400) is calculated. In the present disclosure, the orbit is determined by repeatedly using the range information and the range and angle information for the initial orbit determination. By doing so, unlike the past, the precise orbit information may be secured as the observation information is added, and since the angle information, which is not precise compared to the range, is not used, the initial orbit determination more suitable for the space object may be made.

The initial orbit determination is described in more detail as follows. Two or more observation points randomly selected from an unidentified space object are used to perform the initial orbit determination and generate an unidentified track. When one observation information is added to this unidentified track, and the initial orbit determination does not diverge but converges and the covariance is within the value set by the user, the added unidentified observation is classified into the unidentified track. Otherwise, it is left as the unidentified space object and the process is repeated.

There are two methods of determining an initial orbit: one using range and angle information and the other using only range information. When using the range and angle information, different methods may be used depending on whether 2, 3, or 4 or more observation points are used. Also, depending on the number of observation points, the vector analysis using polynomials may be used to determine the orbit, or the orbital element analysis may be used.

The above-described process may be expressed as an algorithm as follows.

■ Initial orbit determination using range and angle information: Vector analysis of polynomial expansion

algorithm #4-1

■ $\vec{r_1}, \vec{r_2}$ observation (2-points)

$$\vec{r} = \vec{a_0} + t\vec{a_1} + t^2\vec{a_2} + t^3\vec{a_3}$$
$$\vec{v} = \vec{a_1} + 2t\vec{a_2} + 3t^2\vec{a_3}$$
$$- \frac{\mu}{r^3}\vec{r} = 2\vec{a_2} + 6t\vec{a_3}$$

Assume that the states are polynomials above

If $\Delta t = t_2 - t_1$,

$$\vec{r_1} = \vec{a_0} - \Delta t\vec{a_1} + \Delta t^2\vec{a_2} - \Delta t^3\vec{a_3}$$
$$\vec{r_2} = \vec{a_0}$$
$$\vec{v_2} = \vec{a_1}$$

$$- \frac{\mu}{r^{3_1}} = 2\vec{a_2} - 6\Delta t\vec{a_3}$$

$$- \frac{\mu}{r^{3_2}} = 2\vec{a_2}$$

$$\vec{v_2} = \frac{\vec{r_2} - \vec{r_1}}{\Delta t} - \Delta t(\frac{\mu}{3r^{3_2}} + \frac{\mu}{6r^{3_1}})$$

■ $\vec{r_1}, \vec{r_2}, \vec{r_3}$ Observation (3-points)

$$\vec{v_2} = -\Delta t_{32}\left(\frac{1}{\Delta t_{21}\Delta t_{31}} + \frac{\mu}{12r_1^3}\right)\vec{r_1}$$

$$+ (\Delta t_{32} - \Delta t_{21})\left(\frac{1}{\Delta t_{31}\Delta t_{32}} + \frac{\mu}{12r_2^3}\right)\vec{r_2}$$

$$+ \Delta t_{21}\left(\frac{1}{\Delta t_{32}\Delta t_{31}} + \frac{\mu}{12r_r^3}\right)\vec{r_3}$$

■ $\vec{r_1}, \vec{r_2}, ..., \vec{r_n}$ Observation (n-points)

$$\begin{pmatrix} \vec{r_1} \\ \vec{r_2} \\ \vec{r_3} \\ \vec{r_4} \\ \vdots \\ \vec{r_n} \end{pmatrix} = \begin{pmatrix} 1 & -\Delta t_{21} & \Delta t_{21}^2 & -\Delta t_{21}^3 & \Delta t_{21}^4 & -\Delta t_{21}^5 \\ 1 & 0 & 0 & 0 & 0 & 0 \\ 1 & -\Delta t_{32} & \Delta t_{32}^2 & -\Delta t_{32}^3 & \Delta t_{32}^4 & -\Delta t_{32}^5 \\ 1 & -\Delta t_{42} & \Delta t_{42}^2 & -\Delta t_{42}^3 & \Delta t_{42}^4 & -\Delta t_{42}^5 \\ \cdots & \cdots & \cdots & \cdots & \cdots & \cdots \\ 1 & -\Delta t_{n2} & \Delta t_{n2}^2 & -\Delta t_{n2}^3 & \Delta t_{n2}^4 & -\Delta t_{n2}^5 \end{pmatrix}\begin{pmatrix} a_0 \\ a_1 \\ a_2 \\ a_3 \end{pmatrix}$$

$$\begin{pmatrix} \vec{r_1} \\ \vec{r_2} \\ \vec{r_3} \\ \vec{r_4} \\ \vdots \\ \vec{r_n} \end{pmatrix} = \begin{pmatrix} 0 & 0 & -2\frac{r_1^3}{\mu} & 6\Delta t_{21}\frac{r_1^3}{\mu} & -12\Delta t_{21}^2\frac{r_1^3}{\mu} & 20\Delta t_{21}^2\frac{r_1^3}{\mu} \\ 0 & 0 & -\frac{r_2^3}{\mu} & 0 & 0 & 0 \\ 0 & 0 & 2\frac{r_3^3}{\mu} & -6\Delta t_{32}\frac{r_3^3}{\mu} & 12\Delta t_{32}^2\frac{r_3^3}{\mu} & -20\Delta t_{32}^2\frac{r_3^3}{\mu} \\ 0 & 0 & 2\frac{r_4^3}{\mu} & -6\Delta t_{42}\frac{r_4^3}{\mu} & 12\Delta t_{42}^2\frac{r_4^3}{\mu} & -20\Delta t_{42}^2 r_4^3 \end{pmatrix}$$

■ Initial orbit determination using range and angle information: Orbital element analysis

algorithm #4-2

■ How to derive orbital elements (2-points)

1) $\vec{r_1}, \vec{r_2}$ Measurement

2) Determine orbital plane

$$[c_1, c_2, c_3] = \frac{\vec{r1} \times \vec{r2}}{|\vec{r1} \times \vec{r2}|}$$ Plane with normal vector $[c_1, c_2, c_3]$, $c_1 x + c_2 y + c_3 z = 0$ is the orbital plane

3) Eccentricity $$\vec{e} = \frac{\vec{r_2} - \vec{r_1}}{\vec{r_1} + \vec{r_2}}(r_1 \vec{r_2} + r_1 \vec{r_2})$$

4) semi-parameter(In an ellipse, $p = a(1 - e^2)$ )

$$p = |\frac{e(\vec{r_1} \times \vec{r_2}) - r_2 \vec{r_1} + r_1 r_2}{(\vec{r_2} - \vec{r_1})}|$$

Substitute the eccentricity e to obtain the semi-major axis $\alpha$

5) Orbital inclination $(i)$, true anomaly$(\nu)$, argumented perigee$(\Omega)$

$$i = \tan^{-1}(\frac{c_3}{\sqrt{c_1^2 + c_2^2}}) - 90, \quad \nu_n = \tan^{-1}(\frac{x_n}{y_n}), \quad \Omega = \tan^{-1}(-\frac{c_1}{c_2})$$

■ How to derive orbital elements (n−points)

1) $\vec{r_1}, \vec{r_2}, ..., \vec{r_n}$ Measurement

$$e = \left| \frac{(r_2 - r_3)\vec{r_1} + (r_3 - r_{rem(4,n)})\vec{r_2} + (r_{rem(4,n)} - r_{rem(5,n)})\vec{r_3} + ... + (r_1 - r_2)\vec{r_n}}{r_1 \times r_2 + r_2 \times r_3 + ... + r_n \times r_1} \right|$$

$$N = r_1(\vec{r_2} \times \vec{r_3}) + r_2(\vec{r_3} \times \vec{r_{rem(4,n)}}) + r_3(\vec{r_{rem(4,n)}} \times \vec{r_{rem(5,n)}}) + ... + r_n(\vec{r_1} \times \vec{r_2})$$

$$D = \vec{r_1} \times \vec{r_2} + \vec{r_2} \times \vec{r_3} + ... + \vec{r_n} \times \vec{r_1}$$

$$a = \frac{N}{D}$$

Or

$$e = \frac{1}{n}\left( \frac{r_1 - r_2}{x_2 - x_1} + \frac{r_3 - r_2}{x_3 - x_2} + ... + \frac{r_n - r_1}{x_n - x_1} \right)$$

$$p = \frac{r_1 + ex_1 + r_2 + ex_2 + ... + r_n + ex_n + r_n + ex_n}{n}$$

Satisfy $c_1^2 + c_2^2 + c_3^2 = 1$

Determine coefficients c1, c2, and c3 of plane minimizing
$(c_1 x_1 + c_2 y_1 + c_3 z_1) + (c_1 x_2 + c_2 y_2 + c_3 z_2) + ... + (c_1 x_n + c_2 y_n + c_3 z_n)$

(over-determined system for homogeneous equation)

$Ac = 0$

$$A = \begin{pmatrix} x_1 & y_1 & z_1 \\ x_2 & y_2 & z_2 \\ ... & ... & ... \\ x_n & y_n & z_n \end{pmatrix}$$

$$c = \begin{pmatrix} c_1 \\ c_2 \\ c_3 \end{pmatrix}$$

Select eigenvector corresponding to minimum value of $c = eigenvector(A^T A)$ eigenvalue

When more than 6 observation points of the unidentified track are collected later and no more observation values are added, the initial orbit determination may be performed again using only range information. Also, when the initial orbit determination using only range information produces a value with a small covariance, the initial orbit determination value using only range information is used, and if not, the result used above is used to register the space object in the space object list.

The above-described process may be expressed as an algorithm as follows.

■ Initial orbit determination using only range information: Vector analysis of polynomial expansion

algorithm #5-1

■ Range measurement value, $\rho_1, \cdots, \rho_N$, $N \geq 6$

$$r_n = a_0 + a_1 t + a_2 t^2 + a_3 t^3 + a_4 t^4 + a_5 t^5 = \sqrt{\rho_n'^2 + R_n'^2 + 2\rho_n' R_1' \cos\phi_n}$$

$$\ddot{r}_n = -\frac{\mu}{r_n^2} = 2a_2 + 6a_3 t + 12a_4 t^2 + 20a_5 t^3$$

Plane passing through the origin $c_1 x + c_2 y + c_3 z = 0$

Range on the plane, $\rho_n' = \rho_n (1 - (\frac{R_n \cdot <c_1, c_2, c_3>}{\rho})^2) \equiv \rho_n (1 - (\frac{\cos\theta}{\rho})^2)$

$R_n' = R_n - R_n \cdot <c_1, c_2, c_3> R_n = R_n(1 - \cos\theta)$

2N equations

Numerically calculate unknown c1, c2, c3, a0, a1, a2, a3, a4, a5

■ Initial orbit determination using only range information: Orbital element analysis

algorithm #5-2

■ Range measurement value, $\rho_1, \cdots, \rho_N$, $N \geq 6$

$$r_n = \frac{p}{1 + e\cos\nu_n} = \sqrt{\rho_n'^2 + R_n'^2 + 2\rho_n' R_1' \cos\phi_n}$$

Plane passing through the origin $c_1 x + c_2 y + c_3 z = 0$

Range on the plane, $\rho_n' = \rho_n (1 - (\frac{R_n \cdot <c_1, c_2, c_3>}{\rho})^2) \equiv \rho_n (1 - (\frac{\cos\theta}{\rho})^2)$

$R_n' = R_n - R_n \cdot <c_1, c_2, c_3> R_n = R_n(1 - \cos\theta)$

N equations

Numerically calculate unknown c1, c2, c3, p, e

2-5. Resource management

As described above, in order to perform various operations, a considerable computational load is placed on the hardware, and therefore, an appropriate resource management method needs to be introduced. In the present disclosure, the resource management is performed including a step of determining the operation range of the detection or tracking beam, a step of determining the number of beams that may be operated within the operation range, and a step of determining the scan time by dividing the number of operations by the pulse repetition interval (PRI).

In this case, when determining the scan time, a beam transit time is determined as a value greater than a comparison time obtained by measuring an angular velocity of a randomly selected space object passing through a ceiling and dividing the measured angular velocity by a beam width, and a maximum tracking time is determined so that a sum of the scan time and a tracking time is less than the beam transit time. Meanwhile, since the number of beams used for tracking is determined in advance, when determining the number of beam operations, the maximum number of simultaneous tracking beams is determined by using the ratio of beams that may be operated as much as the tracking time. In addition, when there is no tracking beam operation, it is determined to continuously operate the search beam.

By operating in this way while managing resources, the computational load of the hardware may be effectively reduced.

2-6. Identification

As described above, in the identification step (S1600), the space object whose orbit was determined in the orbit determination step (S1500) is identified. In this case, conventionally, a method of estimating only the relative range was used, but in this case, there is a problem that it is difficult to identify a space object that has a bias error through movement.

In the present disclosure, in order to solve this problem, the identification is performed by considering both the relative range and the dispersion. The detailed steps of the identification step (S1600) are specifically described as follows.

First, the acquired data is converted into an inertial coordinate system based on the acquired data acquired for one space object through the detection step (S1300) and the tracking step (S1400). Next, the existing data for a space object existing in an existing list is converted into observation data in an inertial coordinate system by transmitting the existing data for the observation time.

The relative range and dispersion between the acquired data and the observed data obtained in this way are calculated. Based on the results of this calculation, space objects having relative ranges and dispersion values within a predetermined reference are identified, and the space objects of the observed data are classified.

In this case, the space objects having a range difference within a predetermined value set by the user and a dispersion value within a predetermined value set by the user are identified and classified. If they do not fall within the predetermined value, they are classified as the unidentified space objects, and the unidentified space objects are collected and used to determine the initial orbit.

[3] Visualization method of space surveillance and tracking radar

Most objects tracked by the conventional military radars are targeted flying objects, and their properties are very different from those of the space objects considered in the present disclosure. Therefore, it is difficult to visualize appropriate information on space objects with the analysis results provided by the conventional radars. Therefore, the present disclosure proposes a visualization method suitable for space objects.

The visualization method of the space surveillance and tracking radar of the present disclosure proposes a visualization method of visualizing the analysis results of a space object in a manner optimized for the space object through an object data storage step, a shape trajectory calculation step, a selection system calculation step, a selective visualization step, and an additional information display step. Each step is described in detail as follows.

In the object data storage step, the results of analyzing of detection, tracking, and identification of a plurality of mutually distinguishable space objects transmitted from the data processing server 500 are stored in the memory of the visualization server 600. Since the visualization itself may require a considerable computational load, the data processing server 500 calculates only the analysis results. In addition, by dividing the work so that the visualization server 600 performs the computations necessary for visualization, the unnecessary load of the data processing server 500 may be reduced and resources may be concentrated only on the analysis.

In the shape trajectory calculation step, 2D and 3D shapes and trajectories for each space object are calculated by a processing unit of the visualization server 600. It is possible to display all of the calculated shapes and trajectories on one screen, but in this case, too many space objects are displayed at once, making it difficult to observe properly. Therefore, the following steps describe the methodology for how to visualize the analysis results of the shape, trajectory, etc., of space objects so that they may be optimally utilized for actual observation.

In the selection system calculation step, the detection state, object type, and radar cross section (RCS) size information for each space object are calculated by the processing unit of the visualization server 600 (the selection system is described in more detail in the following steps).

In the selective visualization step, the shape and trajectory of the space object are visualized and output to the monitoring device 700 according to at least one selection system selected from the detection state, the object type, and the RCS size by the processing unit of the visualization server 600. In other words, rather than displaying a large number of space objects at once, each space object is appropriately labeled according to the selection system, and then displayed differently or whether or not to display is determined for each item of the selection system. This will be described in more detail below.

First, the detection state of the space objects may be classified into categories including {detected space objects, tracked space objects, space objects that are detected but not listed, space objects that are detected but not listed, space objects that are detected but listed}. In addition, depending on the detection state, the colors or shapes may be output differently, or the display may be visualized so that the display may be selected. For example, only {detected space objects} may be selected and displayed, or both {detected space objects}/{tracked space objects} may be selected and displayed, but displayed in red/blue so that they may be distinguished from each other.

In addition, the object type of the space objects may be classified into categories including {operating satellites, terminated satellites, launch vehicle debris, space debris, cube satellites, earth observation satellites, communication satellites, constellation satellites}. In addition, depending on the object type, the colors or shapes may be output differently, or the display may be visualized so that the display may be selected. As in the above example, only {communication satellites} may be selected and displayed, or several desired items may be selected and displayed by distinguishing them by color or shape.

In addition, the size of the shape to be visualized may be displayed differently depending on the size of the radar cross section (RCS) of the space object. The RCS refers to the radar effective reflection area, which is a measure of the degree of reflection of a radar target expressed as the ratio of the intensity of the received scattered electric field to the intensity of the incident electric field at a long range. The RCS is independent of the physical size, and is expressed as a function of the external shape, structure, material, frequency, polarization, and observation direction.

In the additional information display step, the radar state and observation statistics may be displayed together with space object information on the monitoring device 700 by the processing unit of the visualization server 600. By doing so, the surrounding environmental conditions at the time of observation may be grasped at a glance, so that the analysis of the behavior of the space object may be performed more smoothly.

[4] Correction method of space surveillance and tracking radar

As described above, the movement of the space objects is observed and analyzed by the space surveillance and tracking radar. In this case, when there is an error in the space surveillance and tracking radar itself, errors may occur in the analysis results. To prevent such errors, a means of correction is required. In terms of hardware, the multiple correction towers are installed outside the space surveillance and tracking radar. The correction towers are each in charge of the transmitter and receiver elements of the space surveillance and tracking radar and perform the correction. In the comprehensive description, to perform the geometric verification correction by allowing the correction tower provided outside the space surveillance and tracking radar to calculate the physical positions x, y, and z of each of transmitter and receiver elements and physical errors $\delta x$, $\delta y$, and $\delta z$ which are a difference in the physical positions relative to the theoretical positions to correct the physical positions and calculate the time delay $\tau$ of each of the transmitter and receiver elements to find a time synchronization error.

This correction method may include a reception correction preparation step, a transmission correction preparation step, a relative range calculation step, and a geometry verification correction step. Hereinafter, each step will be described in detail.

In order to correct the receiver element, in the reception correction preparation step, a set of sine waves having at least two frequencies close to each other is generated by the correction tower and received by the receiver element to measure a phase. In order to correct the transmitter element, in the reception correction preparation step, a set of sine waves having at least two frequencies close to each other is generated by the transmitter element and received by the correction tower to measure a phase. Here, the reception/transmission correction preparation step is performed separately for each of the receiver element/transmitter element, and therefore, each step may be performed simultaneously. In addition, each step may be considered to be performed in a substantially identical manner, except that the transmission/reception direction of the element-correction tower is different.

In the relative range calculation step, the unknown n and m are determined by calculating the following relative range r relationship plural times so that an error is minimized using ambiguity up to a least common multiple of two wavelengths and an approximate relative range value known in advance to calculate the relative range.

$$R = n\frac{c}{f_1} + \frac{c}{2\pi f_1}\phi_1 = m\frac{c}{f_2} + \frac{c}{2\pi f_2}\phi_2$$

(Here, $f_1$, $f_2$: two frequencies used for a random sinusoidal wave set,
$\varphi_1$, $\varphi_2$: phase difference between the phase generated and the phase measured by the correction tower in each of $f_1$ and $f_2$,
c: speed of light,
n, m: random integer)

A method of determining the unknowns n and m will be described in more detail as follows. By applying the general relationship between frequency f, wavelength $\lambda$, and velocity v ($f = v/\lambda$) and organizing the terms composed of complex variables into p, the equation may be simplified into the following form.

$$\lambda_1(n + p_1) = \lambda_2(m + p_2)$$

Here, the ambiguity occurs as much as the range to the least common multiple of the two wavelengths $\lambda_1$ and $\lambda_2$, and since the approximate relative range is known in advance, the values of the unknowns n and m may be determined by calculating plural times with the equation to minimize the error. In addition, the accuracy may be further improved by performing the phase measurements using this set of sine waves plural times at different frequencies.

In the geometric verification correction step, the physical errors $\delta x$, $\delta y$, and $\delta z$ and the time delay $\tau$ of the receiver element or the transmitter element are calculated and corrected using a relative range result r obtained by performing reception correction preparation step-relative range calculation step or transmission correction preparation step-relative range calculation step at least four times (physical error, the unknown of time delay is four) in different environments and the following equation.

$$R_{c_n nm} = \sqrt{(x_{c_n} - ndx + \delta x_{nm})^2 + (y_{c_n} - mdy + \delta y_{nm})^2 + (z_{c_n} \delta z_{nm})^2} + bias$$

($R_{cnm}$: relative range between antenna elements and correction towers in n × m,
$x_c$, $y_c$, $z_c$: absolute positions of antenna elements,
n, m: arbitrary integers and arbitrary positions of antenna arrays,
dx, dy: spacing of arrays separated by x and y axes,
$\delta x_{nm}$, $\delta y_{nm}$, $\delta z_{nm}$: displacements of antenna elements along x, y, and z axes,
bias: system bias for range).

By performing the measurement plural times while moving the correction tower to numerically calculating $\delta x_{nm}$, $\delta y_{nm}$, $\delta z_{nm}$, and bias, the error of the space surveillance and tracking radar may be more accurately compensated.

According to the present disclosure, since it is specialized in the surveillance and tracking of space objects, it is possible to correctly and accurately analyze the risk of collision between the space objects and the risk of falling of the space objects, and a list of the space objects.

In relation to the detection/tracking function, it is possible to improve the detection/tracking performance and system performance by introducing the detection/tracking/resource management technology suitable for the detection of the space objects.

In relation to the identification function, it is possible to be more robust to the orbit adjustment than the conventional method by the identification algorithm provided by the present disclosure.

In relation to the initial orbit determination function, it is possible to newly suggest the initial orbit determination method suitable for the space surveillance and tracking, although it has not been known in the past.

In relation to the Doppler estimation function, it was difficult to estimate the Doppler for the space objects in the conventional long-range radar, while in the present disclosure, it is possible to perform the Doppler estimation by introducing a new method.

In relation to the visualization function, it is possible to realize the effective visualization method suitable for the space surveillance.

The present disclosure is not limited to the embodiments described above, and may be applied to various fields. In addition, the present disclosure may be variously modified by those skilled in the art to which the present disclosure pertains without departing from the gist of the present disclosure claimed in the claims.

**Claims**

1. A space surveillance and tracking radar, comprising:

   a radar antenna (100) that transmits and receives a radar signal for detecting a space object;
   an RF transmit/receive module (200) that is connected to the radar antenna (100) to convert the radar signal into an RF signal and transmit and receive the RF signal;
   a D/A conversion chip (300) that is connected to the RF transmit/receive module (200) to convert a digital signal and an analog signal to each other;
   a network interface card (NIC) (400) that is connected to the D/A conversion chip (300) to transmit information;
   a data processing server 500 that includes a CPU and memory (510) and a GPU (520) including a GPU processing unit (521) and a GPU memory (522) and performs analysis of detection, tracking, and identification of a space object;
   a visualization server (600) that is connected to the data processing server (500) to receive results of analyzing the detection, tracking, and identification of the space object and processing the results into visualization information; and
   a monitoring device (700) that is connected to the visualization server (600) and to output the visualization information,
   wherein the NIC 400 is configured to directly access the GPU memory (522) to record the information, and the GPU processing unit (521) is configured to perform signal processing on the information stored in the GPU memory (522) and transmits the processed information to the CPU and memory (510).

2. An analysis method of a space surveillance and tracking radar, which includes analysis of detection, tracking, and identification of a space object by the space surveillance and tracking radar of claim 1, comprising:

a signal receiving step (S1100) in which the radar signal transmitted from the space surveillance and tracking radar and reflected by the space object is received by the space surveillance and tracking radar;

a data generating step (S1200) in which radar data D(t,r) expressed as a function value of time t and range r is generated based on the received radar signal;

a detection step (S1300) in which the radar data is accumulated and analyzed to detect the space object;

a tracking step (S1400) in which the radar data for the space object detected in the detection step (S1300) is data associated;

an orbit determination step (S1500) in which an orbit of the space object tracked in the tracking step (S1400) is calculated;

an identification step (S1600) in which the space object whose orbit is determined in the orbit determination step (S1500) is identified; and

a listing step (S1700) in which the space object identified in the identification step (S1600) is listed.

3. The analysis method of claim 2, wherein the detection step (S1300) includes:

a step (S1310) in which received M (M=natural number) radar data are accumulated and stored (D($t_1$,$r_1$), ..., D($t_m$,$r_m$));

a step (S1320) in which N (N=natural number) radar data having a size greater than or equal to a predetermined boundary value $\gamma$ are selected, and vectors composed of time t and range r, respectively, are generated;

a step (S1330) in which a step (S1331) in which three samples [$t_a$, $t_b$, $t_c$], [$r_a$, $r_b$, $r_c$] are randomly selected among the N time and range vectors, a step in which a set of coefficients $a_0$, $a_1$, and $a_2$ of a governing equation in a form of a second-order polynomial are calculated as follows (S1332), and a step (S1333) in which the number of radar data k whose range from the governing equation function is within a predetermined range value inlier is counted are recursively performed plural times;

$$\begin{pmatrix} a_0(i) \\ a_1(i) \\ a_2(i) \end{pmatrix} = \begin{pmatrix} 1 & t_a & t_a^2 \\ 1 & t_b & t_b^2 \\ 1 & t_c & t_c^2 \end{pmatrix}^{-1} \begin{pmatrix} r_a \\ r_b \\ r_c \end{pmatrix}$$

a step (S1340) in which a single governing equation is determined by the set of coefficients $a_0$, $a_1$, and $a_2$ in a maximum value of a plurality of counted number k values obtained by the recursive execution or at least one governing equation is determined by the set of coefficients $a_0$, $a_1$, and $a_2$ when the counted number k is greater than or equal to a predetermined reference value Thres;

a step (S1351) in which non-coherent pulse integration is performed in which a size d of N radar data is all added for a specific time t according to the following equation, based on the radar data D(t,r) expressed by the determined governing equation $a_0+a_1t[i]+a_2t^2[i]=r$;

$$d'[n] = \sum_{i=1}^{N} (d[t,i])$$

a step (S1360) of determining whether an absolute value of the result value obtained by the integration is greater than a predetermined detection threshold value based on whether the following equation is satisfied; and |d'[n]| > Thres

a step in which when the absolute value of the result value obtained by the integration is greater than the predetermined detection threshold, it is determined as a detection success, and a range r value from the space object at the specific time t is determined from the result value determined as the detection success.

4. The analysis method of claim 2, wherein the detection step (S1300) includes:

a step (S1310) in which received M (M=natural number) radar data are accumulated and stored (D($t_1$,$r_1$), ..., D($t_m$, $r_m$));

a step (S1320) in which N (N=natural number) radar data having a size greater than or equal to a predetermined boundary value $\gamma$ are selected, and vectors composed of time t and range r, respectively, are generated;

a step (S1330) in which a step (S1331) in which three samples [$t_a$, $t_b$, $t_c$], [$r_a$, $r_b$, $r_c$] are randomly selected among the N time and range vectors, a step in which a set of coefficients $a_0$, $a_1$, and $a_2$ of a governing equation in a form of a second-order polynomial are calculated as follows (S1332), and a step (S1333) in which the number of radar data k whose range from the governing equation function is within a predetermined range value inlier is counted are recursively performed plural times;

$$\begin{pmatrix} a_0(i) \\ a_1(i) \\ a_2(i) \end{pmatrix} = \begin{pmatrix} 1 & t_a & t_a^2 \\ 1 & t_b & t_b^2 \\ 1 & t_c & t_c^2 \end{pmatrix}^{-1} \begin{pmatrix} r_a \\ r_b \\ r_c \end{pmatrix}$$

a step (S1340) in which at least one governing equation is determined by the set of coefficients $a_0$, $a_1$, and $a_2$ when any of a plurality of counted number k values obtained by the recursive execution is a maximum value or at least one governing equation is determined by the set of coefficients $a_0$, $a_1$, and $a_2$ when the counted number k is greater than or equal to a predetermined reference value Thres;

a step (S1352) in which coherent pulse integration is performed in which sizes d of N radar data are phase-compensated for each pulse and then all added for a specific time t according to the following equation, based on the radar data D(t,r) expressed by the determined governing equation $a_0+a_1t[i]+a_2t^2[i]=r$;

$$d'[n] = \sum_{i=1}^{N} \left( d[t,i] * e^{-i\phi[n,i]} \right)$$

$$\phi[n,i] = \frac{a_1 t[i] + a_2 t[i]^2}{\lambda} \Delta R$$

(Here, $\phi[n,i]$ : compensation phase, $\Delta R$: resolution of one cell, $\lambda$: wavelength of radar center frequency)

a step (S1360) of determining whether an absolute value of the result value obtained by the integration is greater than a predetermined detection threshold value based on whether the following equation is satisfied; and $|d'[n]| >$ Thres

a step in which when the absolute value of the result value obtained by the integration is greater than the predetermined detection threshold, it is determined as a detection success, and a range r value from the space object at the specific time t is determined from the result value determined as the detection success.

5. The analysis method of claim 2, further comprising:

prior to the data association operation of the tracking step (S1400), a Doppler estimation step in which one radar signal is divided into several and Doppler estimation is performed on one signal, wherein the Doppler estimation step includes:

a step in which the received radar signal s(t) and split match filters $mf_1(t)$, ..., $mf_n(t)$ divided into (N is a natural number) are calculated according to the following equation to obtain N compressed signals; and

$$s_{ci}(t) = IFFT(FFT(mf_i(t).*FFT(s(t)))$$

a step in which the Doppler estimation is performed on a range detected for N signals using a short time Fourier transform (STFT) method or a periodogram method according to the following equations.

$$f = \mathrm{STFT}\left([s_{c1}(r), \cdots, s_{cn}(r)]\right)$$

$$f = \mathrm{STFT}\left([s_{c1}(r), \cdots, s_{cn}(r)]\right)$$

6. The analysis method of claim 2, wherein, in the tracking step (S1400),

to allow movement of the orbit in an inertial coordinate system to satisfy a condition that it exists on a single plane, the data association is performed on a space object that exist close to a predetermined reference on the plane, but space objects whose travel directions match and space objects whose ranges do not change abruptly within a predetermined reference are classified, and

when an unidentified space object is observed more than twice as a result of the classification, the orbit determination step (S1500) is performed, and the space object is incorporated as a new space object and thus the tracking step (S1400) is performed.

7. The analysis method of claim 2, wherein the orbit determination step (S1500) determines the orbit by recursively using range information and range and angle information for determining an initial orbit.

8. The analysis method of claim 2, further comprising:

to perform resource management,
a step of determining an operating range of a detection or tracking beam;
a step of determining the number of beam operations that operates within the operating range;
a step of determining a scan time obtained by dividing the number of operations by a pulse repetition interval (PRI),
wherein, when determining the scan time, a beam transit time is determined as a value greater than a comparison time obtained by measuring an angular velocity of a randomly selected space object passing through a ceiling and dividing the measured angular velocity by a beam width, and a maximum tracking time is determined so that a sum of the scan time and a tracking time is less than the beam transit time,
when determining the number of beam operations, the maximum number of simultaneous tracking beam operations is determined by using a ratio of beams that operates as much as the tracking time based on the number of predetermined tracking beams, and
when there is no tracking beam operation, it is determined to continuously operate a search beam.

9. The analysis method of claim 2, wherein the identification step (S1600) includes:

to perform identification using an orbit correlation considering a relative range and dispersion,
a step of converting the acquired data into an inertial coordinate system based on the acquired data acquired for one space object through the detection step (S1300) and the tracking step (S1400);
a step of converting existing data for a space object existing in an existing list into observation data in an inertial coordinate system by transmitting the existing data for the observation time;
a step of calculating the relative range and dispersion between the acquired data and the observed data; and
a step of classifying the space object of the observed data by identifying a space object having a relative range and dispersion value within the predetermined reference.

10. A visualization method of a space surveillance and tracking radar that visualizes an analysis result of a space object by the space surveillance and tracking radar of claim 1, comprising:

an object data storage step in which results of analyzing of detection, tracking, and identification of a plurality of mutually distinguishable space objects transmitted from the data processing server (500) are stored in a memory of the visualization server (600);
a shape trajectory calculation step in which 2D and 3D shapes and trajectories for each space object are calculated by a processing unit of the visualization server (600);
a selection system calculation step in which information on a detection state, an object type, and radar cross section (RCS) size for each space object is calculated by the processing unit of the visualization server (600);
a selective visualization step in which the shape and trajectory of the space object are visualized and output to the monitoring device (700) according to at least one selection system selected from the detection state, the object type, and the RCS size by the processing unit of the visualization server (600); and
an additional information display step in which a radar state and observation statistics are displayed together with space object information on the monitoring device (700) by the processing unit of the visualization server (600).

11. The visualization method of claim 10, wherein, in the selective visualization step,

the detection state of the space object is classified into classification items including {detected space object, tracked space object, space object that is not listed but detected, space object that is detected but not listed, and space object that is listed but detected}, and is visualized so that colors or shapes are output differently or display is selectable depending on the detection state, and
the object type of the space object is classified into classification items including {operating satellite, satellite whose operating is terminated, launch vehicle debris, space debris, cube satellite, earth observation satellite, communication satellite, and constellation satellite}, and is visualized so that colors or shapes are output differently or display is selectable depending on the object type, and is visualized so that the size of the shape visualized is displayed differently depending on the RCS size of the space object.

12. A correction method of a space surveillance and tracking radar that corrects an analysis result of a space object by the space surveillance and tracking radar of claim 1, comprising:

to perform a geometric verification correction by allowing a correction tower provided outside the space surveillance and tracking radar to calculate physical positions x, y, and z of each of transmitter and receiver elements and physical errors $\delta x$, $\delta y$, and $\delta z$ which are a difference in the physical positions relative to theoretical positions to correct the physical positions and calculate a time delay $\tau$ of each of the transmitter and receiver elements to find a time synchronization error,
in order to correct the receiver element, a reception correction preparation step in which a set of sine waves having at least two frequencies close to each other is generated by the correction tower and received by the receiver element to measure a phase;
in order to correct the transmitter element, a transmission correction preparation step in which the set of sine waves having at least two frequencies close to each other is generated by the transmitter element and received by the correction tower to measure the phase;
a relative range calculation step in which unknowns n and m are determined by calculating the following relative range r relationship plural times so that an error is minimized using ambiguity up to a least common multiple of two wavelengths and an approximate relative range value known in advance to calculate the relative range;

$$R = n\frac{c}{f_1} + \frac{c}{2\pi f_1}\phi_1 = m\frac{c}{f_2} + \frac{c}{2\pi f_2}\phi_2$$

(Here, $f_1$, $f_2$: two frequencies used for a random sinusoidal wave set,
$\varphi_1$, $\varphi_2$: phase difference between the phase generated and the phase measured by the correction tower in each of $f_1$ and $f_2$,
c: speed of light,
n, m: random integer)
a geometric verification correction step in which the physical errors $\delta x$, $\delta y$, and $\delta z$ and the time delay $\tau$ of the receiver element or the transmitter element are calculated and corrected using a relative range result r obtained by performing reception correction preparation step-relative range calculation step or transmission correction preparation step-relative range calculation step at least four times in different environments and the following equation.

$$R_{c_n nm} = \sqrt{(x_{c_n} - ndx + \delta x_{nm})^2 + (y_{c_n} - mdy + \delta y_{nm})^2 + (z_{c_n} \delta z_{nm})^2} + bias$$

($R_{cnm}$: relative range between antenna elements and correction towers in n $\times$ m,
$x_c$, $y_c$, $z_c$: absolute positions of antenna elements, n, m: arbitrary integers and arbitrary positions of antenna arrays,

dx, dy: spacing of arrays separated by x and y axes, $\delta x_{nm}, \delta y_{nm}, \delta z_{nm}$: displacements of antenna elements along x, y, and z axes,

bias: system bias for range).

FIG. 1

FIG. 2

```
                    ┌─────────────────────┐
                    │        START        │
                    └─────────────────────┘
                              │
                              ▼
           ┌──────────────────────────────────┐  S1100
           │       RECEIVE RADAR SIGNAL        │
           └──────────────────────────────────┘
                         │ s(t)
                         ▼
           ┌──────────────────────────────────┐  S1200
           │    GENERATE RADAR DATA BASED ON   │
           │        RECEIVED RADAR SIGNAL      │
           └──────────────────────────────────┘
                         │ D(t,r)
                         ▼
           ┌──────────────────────────────────┐  S1300
           │ DETECT SPACE OBJECT BY ACCUMULATING │
           │      AND ANALYZING RADAR DATA      │
           └──────────────────────────────────┘
      ┌──────────┐              │
      │ ESTIMATE │─────────────▶│
      │ DOPPLER  │              ▼
      └──────────┘  ┌──────────────────────────────────┐  S1400
           │        TRACK SPACE OBJECT BY DATA          │
           │      ASSOCIATION WITH RADAR DATA           │
           └──────────────────────────────────┘
                              ▼
           ┌──────────────────────────────────┐  S1500
           │      CALCULATE INITIAL ORBIT OF    │
           │          TRACKED SPACE OBJECT      │
           └──────────────────────────────────┘
                              ▼
           ┌──────────────────────────────────┐  S1600
           │        IDENTIFY SPACE OBJECT       │
           │     WHOSE ORBIT IS DETERMINED      │
           └──────────────────────────────────┘
                              ▼
           ┌──────────────────────────────────┐  S1700
           │     LIST IDENTIFIED SPACE OBJECT   │
           └──────────────────────────────────┘
                              ▼
                    ┌─────────────────────┐
                    │         END         │
                    └─────────────────────┘
```

FIG. 3

FIG. 4

```
                                                          ┌─ S1310
      ┌──────────────────────────────────────────────────┐
      │         ACCUMULATE AND STORE M RADAR DATA         │
      └──────────────────────────────────────────────────┘
  ┌───┐                  │ D(t₁,r₁), ..., D(tₘ,rₘ)
  │ A ├──────┐           ▼                               ┌─ S1320
  └───┘      │ ┌──────────────────────────────────────────┐
             └▶│ SELECT N RADAR DATA GREATER THAN OR EQUAL TO│
               │ BOUNDARY VALUE AND GENERATE VECTOR COMPOSED OF│
               │ TIME AND RANGE. RESPECTIVELY                │
               └──────────────────────────────────────────┘
                          │ [t₁, ..., tₙ], [r₁, ..., rₙ]
                          ▼                               ┌─ S1330
      ┌──────────────────────────────────────────────────┐
      │                REPEAT PLURAL TIMES                │
      │  ┌────────────────────────────────────────────┐  │┌─ S1331
      │  │      ARBITRARILY SELECT 3 SAMPLES          │  │
      │  │    AMONG N TIME/RANGE VECTORS             │  │
      │  └────────────────────────────────────────────┘  │
      │              │ [tₐ, t_b, t_c], [rₐ, r_b, r_c]     │
      │              ▼                                  ┌─ S1332
      │  ┌────────────────────────────────────────────┐  │
      │  │ CALCULATE COEFFICIENT SET FOR GOVERNING   │  │
      │  │ EQUATIO IN FORM OF SECOND-ORDER           │  │
      │  └────────────────────────────────────────────┘  │
      │              │ a₀, a₁, a₂                          │
      │              ▼                                  ┌─ S1333
      │  ┌────────────────────────────────────────────┐  │
      │  │ COUNT NUMBER OF RADAR DATA WITHIN REFERENCE│  │
      │  │ RANGE FROM GOVERNING EQUATION FUNCTION     │  │
      │  └────────────────────────────────────────────┘  │
      │              │ k                                  │
      └──────────────────────────────────────────────────┘
                          ▼                               ┌─ S1340
      ┌──────────────────────────────────────────────────┐
      │ DETERMINE GOVERNING EQUATION WITH SET OF         │
      │ COEFFICIENTS IN k=MAXIMUM VALUE OR k>Thres       │
      └──────────────────────────────────────────────────┘
                          │ a₀+a₁t[i]+a₂t²[i]=r
                          ▼                               ┌─ S1351
      ┌──────────────────────────────────────────────────┐   or
      │ PERFORM NON-COHERENT OR COHERENT                 │   S1352
      │ PULSE SUPERPOSITION ON RADAR DATA                │
      └──────────────────────────────────────────────────┘
                          │ d'[n]                ┌─ S1360
                          ▼
                    ╱───────────────╲       N    ┌───┐
                   ╱  D'[N] > DETECTION╲─────────▶│ A │
                   ╲  THRESHOLD VALUE? ╱          └───┘
                    ╲───────────────╱
                          │ Y
                          ▼
                 DETECTION SUCCESS
```

The governing equation: $a_0 + a_1 t[i] + a_2 t^2[i] = r$

Coefficients: $a_0$, $a_1$, $a_2$

FIG. 5

FIG. 6

## Before Range Cell Migration Correction

Range (m)

## After Range Cell Migration Correction

Range (m)

FIG. 7

FIG. 8

```
┌──────────┐        ┌─────────────────────────────────┐
│  SPACE   │        │ SPACE OBJECT POSITION, VELOCITY, │
│  OBJECT  │        │ AND COVARIANCE PROPAGATION       │
│  LIST    │        └─────────────────────────────────┘
└──────────┘                        │
                                    ▼
                    ┌─────────────────────────────────┐
                    │ GENERATE SPACE OBJECT TRACK      │
                    │ PASSING THROUGH SPACE SURVEILLANCE│
                    │ AND TRACKING RADAR FIELD OF VIEW │
                    └─────────────────────────────────┘
                                    │
                                    ▼
                    ┌─────────────────────────────────┐
                    │ COVARIANCE PROPAGATION           │
                    │ OF TRACK AT PRI INTERVAL         │
                    └─────────────────────────────────┘
                                    │
                                    ▼
                    ┌─────────────────────────────────┐
                    │ DETECTION STEP:                  │
                    │ DETECT SPACE OBJECT              │
                    └─────────────────────────────────┘
                                    │
                                    ▼
                        ◇ (EXISTING ORBIT CORRELATION)   N    ┌──────────┐   ┌──────────┐
                        ◇  UNIDENTIFIED OBJECT  ◇───────────▶ │ DETERMINE│   │ DETERMINE│
                                    │                         │ PRECISE  │──▶│ PRECISE  │
                                  Y │                         │ ORBIT    │   │ ORBIT    │
                                    ▼                         └──────────┘   └──────────┘
                    ┌─────────────────────────────────┐
                    │ (TRACK GENERATION)               │
                    │ ORBIT DETERMINATION STEP:        │
                    │ DETERMINE INITIAL ORBIT          │
                    └─────────────────────────────────┘
                                    │
                                    ▼
                    ┌─────────────────────────────────┐
                    │ SELECT AS UNIDENTIFIED           │
                    │ LIST CANDIDATE                   │
                    └─────────────────────────────────┘
                                    │
                                    ▼
                    ┌─────────────────────────────────┐
                    │ END INITIAL                      │
                    │ ORBIT DETERMINATION              │
                    └─────────────────────────────────┘
```